# EUROPEAN PATENT SPECIFICATION

(11) **EP 0 947 816 B1**
(45) Date of publication and mention of the grant of the patent: **22.12.2004**
(21) Application number: 99105163.2
(22) Date of filing: 30.03.1999
(51) Int. Cl.: G01L 9/12, G01L 9/00

(54) **Capacitive type pressure sensor**
Kapazitiver Druckwandler
Capteur de pression capacitif

(30) Priority: 31.03.1998 JP 8544498; 31.03.1998 JP 8564198; 21.09.1998 JP 26642698
(43) Date of publication of application: 06.10.1999
(73) Proprietor: Hitachi, Ltd., Chiyoda-ku, Tokyo 101-8010 (JP); Hitachi Car Engineering Co., Ltd., Hitachinaka-shi, Ibaraki 312-0062 (JP)
(72) Inventor: Horie, Junichi, Hitachinaka-shi, Ibaraki 312-0063 (JP); Onose, Yasuo, Naka-gun, Ibaraki 319-1102 (JP); Ichikawa, Norio, Mito-shi, Ibaraki 311-4146 (JP); Kuryu, Seiji, Hitachinaka-shi, Ibaraki 312-0041 (JP); Shimada, Satoshi, Hitachi-shi, Ibaraki 319-1224 (JP); Saito, Akihiko, Hadano-shi, Kanagawa 259-1322 (JP); Hanzawa, Keiji, Mito-shi, Ibaraki 310-0836 (JP); Matsumoto, Masahiro, Hitachi-shi, Ibaraki 316-0024 (JP); Moriya, Hiroshi, Niihara-gun, Ibaraki 315-0054 (JP); Yasukawa, Akio, Kashiwa-shi, Chiba 277-0084 (JP); Miyazaki, Atsushi, Mito-shi, Ibaraki 310-0912 (JP)
(74) Representative: Beetz & Partner Patentanwälte

(56) References cited:
- EP-A- 0 385 574
- US-A- 4 849 071
- US-A- 5 431 057
- DE BRUYKER D ET AL: "A combined piezoresistive/capacitive pressure sensor with self-test function based on thermal actuation" SENSORS AND ACTUATORS A,CH,ELSEVIER SEQUOIA S.A., LAUSANNE, vol. 66, no. 1-3, 1 April 1998 (1998-04-01), pages 70-75, XP004143971 ISSN: 0924-4247

## Description

### BACKGROUND OF THE INVENTION

The present invention relates to a capacitive type pressure sensor for detecting fluid pressure, and particularly to a construction of a pressure sensor used for controlling an engine of vehicle and a method of manufacturing the sensor utilizing a semiconductor micro-machining technology.

As a conventional pressure sensor, pressure sensors are disclosed, for example, in Japanese Patent Publication No.62-502645 and Japanese Patent Laid-open No.6-252420.

Japanese Patent Publication No.62-502645 proposes a construction of a pressure sensor and a method of manufacturing the sensor. The pressure sensor is composed of a semiconductor substrate; a solid material having a central portion capable of being deformed, the central portion being arranged on the substrate through a cavity, a peripheral portion bonded to the substrate and an etch channel portion extending to the central portion through the peripheral portion; and a material for sealing the etch channel.

Japanese Patent Laid-open No.6-252420 proposes a pressure sensor which comprises a first electrode which is formed by doping a surface of a semiconductor substrate; a second electrode made of a polycrystalline diaphragm which is made conductive by doping, the second electrode being arranged above the first electrode; a cavity formed between the first and the second electrodes; and a plug for sealing the cavity selectively deposited in an opening portion which is formed so as to penetrate a layer of the diaphragm, wherein the second electrode of diaphragm is deformed by a pressure difference between the diaphragm cavity and the external, and a change in electric capacitance due to the deformation is detected.

US 4,849,071 discloses a method of forming a sealed diaphragm on a substrate. A sacrificial layer is provided on a substrate and a diaphragm layer is provided thereon. One aperture is provided in the diaphragm spaced from the periphery of the diaphragm layer, at least partially removing the sacrificial layer is removed by way of etching through the aperture, and the aperture is closed.

US 5,431,057 discloses an integratable capacitative pressure sensor. A guard film is provided on a semiconductor substrate, a polycrystalline semiconductor film is precipitated and doped, and the guard film is removed by etching. Then, the semiconductor zone is insulated from the semiconductor substrate and an insulator film is applied on the insulated semiconductor zone.

### SUMMARY OF THE INVENTION

However, as problems when a capacitive semiconductor pressure sensor is fabricated on a surface of a semiconductor substrate, there are problems in that the capacitive semiconductor pressure sensor can not be manufactured at a low cost because the method of sealing the diaphragm is complex, and that design performance can not be obtained due to change in the design value of a cavity size or an amount of distortion because the diaphragm displacing depending on a pressure is elastically deformed by its own remaining stress.

An object of the present invention is to provide a pressure sensor in which the diaphragm can be sealed through a small number of processes and at a low cost.

The above object can be attained by the capacitive semiconductor pressure sensor comprising a semiconductor substrate and a diaphragm having a stage part for being fixed onto a surface of the semiconductor substrate, the diaphragm being displaced corresponding to a change of pressure, wherein a cavity having a nearly uniform gap of 0.1 to 1.3 µm is formed between the surface of the semiconductor substrate and the diaphragm, wherein the cavity is air-tightly sealed by a silicon oxide film deposited through an LPCVD (Low Pressure Chemical Vapor Deposition) method, wherein a fixed electrode in the form of an electrically conductive film is provided at the semiconductor substrate, wherein a dielectric film is formed between said semiconductor substrate and said fixed electrode, and wherein said diaphragm is installed on said semiconductor substrate through said dielectric film without the fixed electrode being interposed.

### BRIEF DESCRIPTION OF THE DRAWINGS

FIG. 1 is a view showing the cross-sectional shape of a first embodiment in accordance with the present invention.
FIG. 2 is a plan view showing the first embodiment in accordance with the present invention.
FIG. 3 is a view showing the cross-sectional shape of a second embodiment in accordance with the present invention.
FIG. 4 is a plan view showing the second embodiment in accordance with the present invention.
FIG. 5 is a view showing a manufacturing process in accordance with the present invention.
FIG. 6 is a view showing a manufacturing process in accordance with the present invention.
FIG. 7 is a diagram showing the condition capable of air-tightly sealing the pressure sensor in accordance with the present invention.

### PREFERRED EMBODIMENT OF THE PRESENT INVENTION

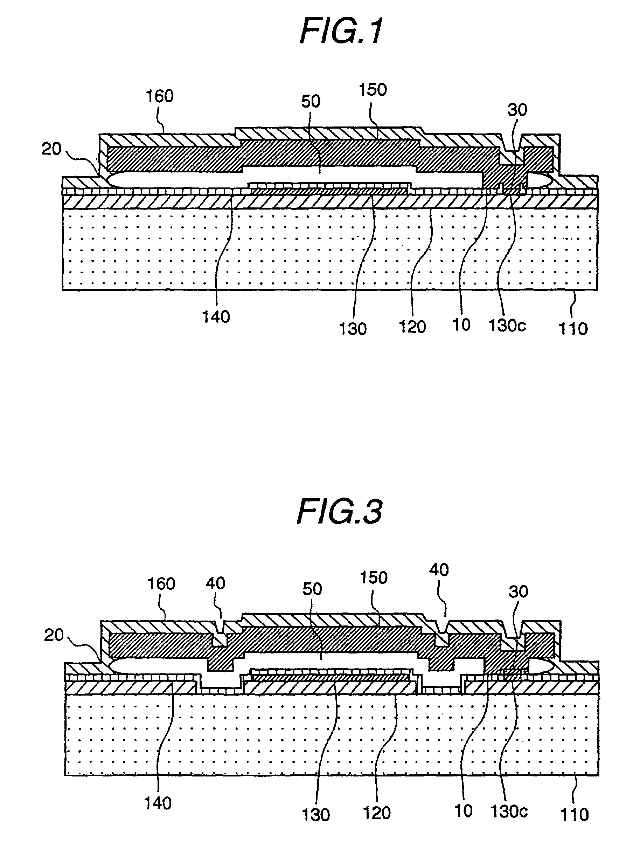

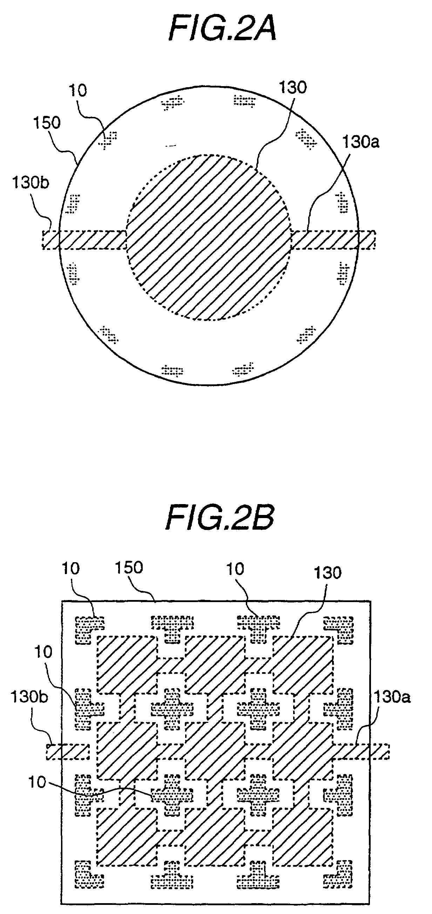

FIG. 1 is a cross-sectional view showing a first embodiment of an electrostatic capacitive pressure sensor to which the present invention is applied. FIG. 2 is a plan view showing the first embodiment.

The pressure sensor is composed of stages 10, a diaphragm sealing part 20, a connection part 30, a cavity 50, a semiconductor substrate 110, a dielectric body 120, a fixed electrode 130, a diaphragm electric wiring 130c, a barrier layer 140, a diaphragm construction 150 and an LPCVD silicon oxide film 160.

A medium to be measured, for example, air applies a pressure onto the diaphragm construction 150 through the LPCVD silicon oxide film 160, and the diaphragm construction 150 is displaced corresponding to a magnitude of the pressure. The magnitude of the displacement is in proportion to the difference between a pressure in the cavity 50 and the pressure of the air. Since the cavity 50 is sealed under a vacuum condition of nearly 30 Pa to 120 Pa which is nearly equal to a vacuum when the LPCVD silicon oxide film 160 is deposited, this sensor can be used as an absolute pressure sensor. At least a surface of the diaphragm construction 150 in the side of the fixed electrode 130 or the whole of the diaphragm construction 150 is made conductive by impurity doping, which is not shown. Therefore, the pressure can be detected because the electrostatic capacitance between the fixed electrode 130 and the diaphragm construction 150 is changed corresponding to the pressure of the air.

A commonly used semiconductor such as single crystal silicon substrate, an SOI (Silicone on Insulator) substrate, an epitaxial substrate or the like may be used as the semiconductor substrate 110. In a case where a C-MOS device known as a low-cost and high integration and the pressure sensor in accordance with the present invention are formed on a single substrate together, a single crystal CZ substrate of n-type or p-type having a resistivity of 8 to 12 Ωcm is used.

The dielectric body 120 may be formed by forming a thermal oxide film, a CVD (Chemical Vapor Deposition) oxide film, a CVD nitride film or the like on the semiconductor substrate 110. With taking into consideration that the specific dielectric constant of silicon oxide film is 3 to 4 and that of silicon nitride film is nearly 7, the silicon oxide film is advantageous because the floating capacitance between the fixed electrode 130 and the semiconductor substrate 110 can be made smaller in the case of the silicon oxide film. In a case where a C-MOS device and the pressure sensor are formed at a time, a thermal oxide film (a field oxide film) may be used as the dielectric body 120. Therefore, it is possible to provide a more economical pressure sensor by reducing number of processes.

In the construction, the fixed electrode 130 is not deformed by pressure because it is formed on the semiconductor substrate 110. As the fixed electrode 130, it is preferable to employ a polycrystalline silicon film which is made electrically conductive by being doped with an impurity. Particularly, it is economical that the fixed electrode 130 is worked using the same material as that of a gate wiring of the CMOS device at a time. Similarly, the diaphragm wiring 130c is also formed using the same material as that of the fixed electrode 130, and serves as the role of a lead wiring from the diaphragm construction 150. Any electrically conductive film can be substitutionally used for both of the fixed electrode 130 and the fixed electrode wiring 130a, and a silicide film is also suitable.

The connection part 30 is constructed so as to make electrically contact between the diaphragm construction 150 and the diaphragm wiring 130c by removing a part of the barrier layer 140 on the diaphragm wiring 130c.

The barrier layer 140 is brought into contact with the fixed electrode 130 to prevent electrically short circuiting when an over load is applied to the diaphragm construction 150, and reduces surface leakage current between the diaphragm construction 150 and the fixed electrode 130. Further, the barrier layer 140 serves as the role of an etching barrier when the cavity 50 is formed by removing through etching of an isolation layer 170 of a sacrificed layer.

The cavity 50 determines a capacitive gap between the fixed electrode 130 and the diaphragm construction 150, and formed by removing the isolation layer 170 deposited in a uniform thickness of 0.1 to 1.3 µm through etching. Therefore, the cavity 50 is formed so as to keep the uniform gap nearly 0.1 to 1.3 µm.

As an example of the isolation layer 170 which is not shown in the figure because it is removed through etching, a silicon oxide film such as a PSG or the like may be used.

The stage 10 is a part for mechanically fixing the diaphragm construction 150 to the semiconductor substrate 110. The stage 10 can be obtained by partially etching the isolation layer 170 after forming a mask through lithography and then forming the diaphragm construction 150.

Although the polycrystalline silicon is most suitable for the diaphragm construction 150 in the present embodiment, it is possible to obtain a pressure sensor having an air-tightly sealed diaphragm construction 150 even employing an electrically conductive or an insulation film made of the other materials. Since the diaphragm construction 150 is deposited on the isolation layer 170 deposited in a uniform thickness of 0.1 to 1.3 µm, the diaphragm construction 150 is formed so as to have a nearly uniform gap to the base after etching the isolation layer 170.

The diaphragm sealing part 20 is an edge portion of the diaphragm construction 150, and a part for air-tightly sealing the diaphragm construction 150 using the LPCVD silicon oxide film 160. A shape of the diaphragm sealing part 20 depends on a manufacturing condition of the LPCVD silicon oxide film 160 and a size of the cavity 50.

In regard to the pressure sensor in accordance with the present invention, the conditions of the sealing material to be taken into consideration when the cavity 50 is air-tightly sealed are that the sealing material is of a compact film property in order to keep the air-tightness of the cavity 50 for a long term, and that the sealing material forms the cavity 50, which does not essentially hinder the diaphragm construction 150 from deforming by pressure, between the fixed electrode 130 and the diaphragm construction 150, and that the sealing material keeps the inside of the cavity 50 in a vacuum in order to use as a reference pressure of the pressure sensor, and that the sealing material has an insulation property in order to prevent occurrence of charge accumulation or current leakage in the diaphragm construction 150. In the present invention, the LPCVD (Low Pressure Chemical Deposition) silicon oxide film is employed as a material satisfying all of these conditions. Because the silicone oxide film the LPCVD silicon oxide film is deposited by thermal energy at a high temperature (700 to 800 °C), the LPCVD silicon oxide film has a film property more compact than a film formed through the other fabrication method depositing, for example, at 400 °C such as a plasma CVD method. Further, since the surface of the semiconductor substrate has a step surface formed by the sensor construction body, it is necessary to take into consideration a step coverage, that is, a film attaching state to the surface of the substrate and the surface perpendicular to the substrate. In the LPCVD silicon oxide film, it is possible to form a deposited film in the side surface portion which has a thickness thicker than 80 % of a thickness in the surface portion. Although an LPCVD silicon nitride film can be considered as another material, the LPCVD silicon nitride film has a disadvantage in that cracks may occur in the film caused by remaining stress in the film itself when silicon nitride is deposited up to a thickness above 2500 Å because the remaining stress (an actual measured value of approximately 1.5 GPa) of the silicon nitride film at depositing is very large compared to that (an actual measured value of approximately 0.15 GPa) of silicone oxide film.

The condition of fabricating the LPCVD silicon oxide film 160 in this embodiment is that a deposition temperature is 720 to 780 °C, a deposition pressure is 30 to 120 Pa, and a deposition gas used is ethyl silicate (TEOS: tetraethyl-orthosilicate) + oxygen (O₂).

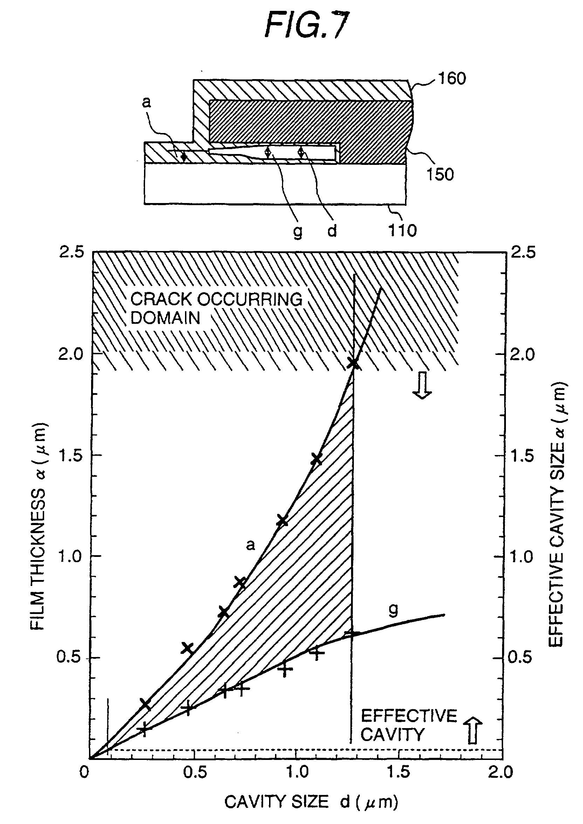

FIG. 7 shows an test result showing the condition capable of air-tightly sealing the cavity 50 using the LPCVD silicon oxide film 160 formed under the fabrication condition described above. The LPCVD silicon oxide film 160 is deposited until the cavity 50 of a sample having a cavity size d of 0.3 to 2.0 µm is air-tightly sealed. After that, a cross section of the sample is observed using a SEM (Scanning Electron Microscope) to measure a minimum film thickness which is necessary to seal the cavity a and an effective cavity size g. The minimum film thickness which is necessary to seal the cavity a is a thickness from the semiconductor substrate 110 at a position near the edge portion of the diaphragm construction 150 where the cavity 50 is completely sealed. The effective cavity size g is a gap of the cavity at a point 10 µm inside from the measuring point of a. The minimum film thickness which is necessary to seal the cavity a is increased as the cavity size d is increased as shown by a line a in the figure. The effective cavity size g is also increased as the cavity size d is increased as shown by a line g in the figure.

Cracks occurs when the film thickness of the LPCVD silicon oxide film 160 is deposited above 1.9 to 2.0 µm. It is said that this is because the remaining stress (thermal stress + intrinsic stress) occurring at depositing the LPCVD silicon oxide film 160 exceeds a fracture strength of the LPCVD silicon oxide film 160 itself. Such cracks become a dust source to decrease the yield of semiconductor. Therefore, the practically maximum effective cavity size d is limited to a value below 1.3 µm. On the other hand, in a case where the cavity size d is below 0.1 µm, the LPCVD silicon oxide 160 penetrates into the cavity 50 to almost eliminate the essentially effective cavity size and displacement of the diaphragm construction 150 is blocked to eliminate the function as the pressure sensor. Therefore, the essentially effective cavity size d is above 0.1 µm.

By the construction as described above, the cavity 50 of 0.1 to 1.3 µm can be air-tightly sealed to a nearly vacuum state of 30 Pa to 120 Pa through a less number of processes, and it is possible to provide a pressure sensor which is low in cost, good in characteristic because of a small floating capacitance and high in stability and reliability as vehicle use.

In addition, since the pressure sensor can be manufactured using a general IC manufacturing process, the pressure sensor can be integrated together with the circuit portion in a one-chip, and accordingly can be made small in size and low in cost.

FIG. 2 (a) is a plan view showing the arrangement of the disk-shaped diaphragm constriction 150 and the stages 10, and FIG. 2 (b) is a plan view showing the arrangement of the square diaphragm 150, the divided electrode 130 and the divided stages 10.

The pressure sensor of FIG. 2 (a) is an example in which the diaphragm construction 150 and the fixed electrode 130 are formed in a disk shape so as not to occur heterogeneity in the elastic deformation by the pressure and the remaining stress, and the stages 10 are divisionally and concentrically arranged in the outer periphery of the diaphragm construction 150. The spacing and the number of the stages 10 are required to be arranged so as to not affect etching of the isolation layer 170.

The fixed electrode wiring 130a is formed by leading out the wiring of the fixed electrode 130 outside the diaphragm construction 150. A dummy wiring 130b is arranged point-symmetrically with respect to the fixed electrode wiring 130a in order to compensate the asymmetry of the diaphragm construction 150 caused by the fixed electrode wiring 130a.

The pressure sensor of FIG. 2 (b) is an example in which the diaphragm construction 150 and the fixed electrode 130 are divisionally arranged in a square shape so as not to occur heterogeneity in the elastic deformation caused by the pressure applied to the diaphragm construction 150 and the remaining stress in the diaphragm construction 150 itself. The stages 10 are arranged so as to equally divide the diaphragm construction 150. In this case, similarly to the case of FIG. 2 (a), the symmetry of the diaphragm construction 150 can be maintained by arranging a dummy wiring 130b.

By the construction described above, the measurement error of the pressure sensor can be reduced because the heterogeneity of deformation in the diaphragm construction 150 can be reduced.

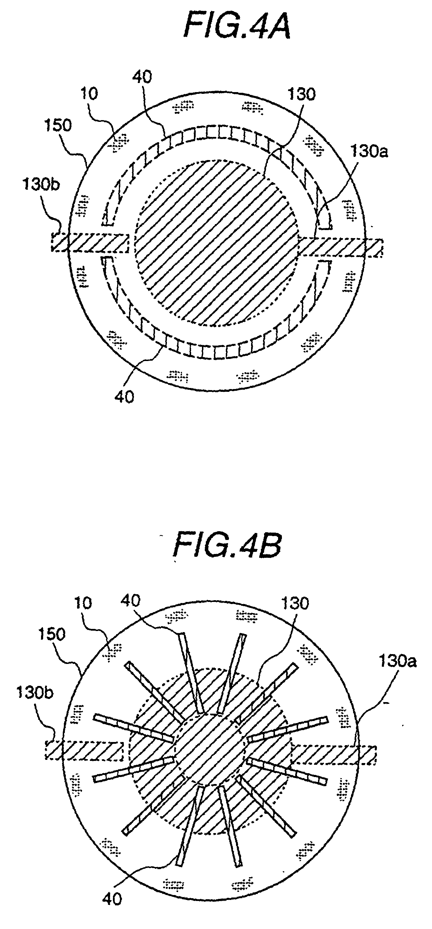

FIG. 3 is a cross-sectional view showing a second embodiment of an electrostatic capacitive pressure sensor to which the present invention is applied, and FIG. 4 is a plan view showing the second embodiment.

The pressure sensor is composed of stages 10, a diaphragm sealing part 20, a connection part 30, a difference-in-grade construction 40, a cavity 50, a semiconductor substrate 110, a dielectric body 120, a fixed electrode 130, a barrier layer 140, a diaphragm construction 150 and an LPCVD silicon oxide film 160.

A different point of the pressure sensor of FIG. 3 from the pressure sensor of FIG. 1 is that the difference-in-grade construction 40 is formed in the diaphragm construction 150 by providing a step in the dielectric body 120. The barrier layer 140 and the isolation layer 170 deposited through CVD after forming the step in the dielectric body 120 have a nearly uniform thickness, the cavity 50 is maintained nearly constant over the diaphragm construction 150 even after the difference-in-grade construction is formed. Although remaining stress caused in the diaphragm construction 150 deforms to bend the diaphragm construction 150 itself, the displacement of the diaphragm construction 150 itself can be reduced by the effect of the difference-in-grade construction 40 to reducing the bending deformation.

In a case where the diaphragm construction 150 is made of polycrystalline silicon, the diaphragm construction 150 is formed by the LPCVD method at a temperature of 560 °C to 680 °C. In this case, it is known that the remaining stress is caused by thermal stress caused when the temperature returned to room temperature from the deposition temperature and by intrinsic stress inherent in the film itself. The thermal stress is caused by a difference between the thermal expansion coefficients of the semiconductor substrate 110 and the polycrystalline silicon. Although the intrinsic stress largely varies depending on the fabrication method of the polycrystalline silicon, it is known that the intrinsic stress is caused by difference in degree of crystallization and that there is a stress distribution in a direction of the film thickness. The difference-in-grade construction 40 acts as a limb to prevent the diaphragm construction 150 from deforming due to the remaining stress. The similar effect can be attained not only by the depression-shaped difference-in-grade construction 40 but by a projection-shaped construction by the fixed electrode 130. Another advantage of the difference-in-grade construction 40 is that a deforming direction of the diaphragm construction 150 due to the remaining stress can be restricted. The deformation can be restricted to the lower side when the limb is formed in a depression shape, and the deformation can be restricted to the upper side when the limb is formed in a projection shape.

By the construction described above, since the diaphragm construction 150 has the difference-in-grade construction 40 of means for reducing deformation due to the remaining stress, the error of the pressure sensor can be reduced because it is possible to prevent the initial position from deviating from a designed value and to control the direction of the deformation.

FIG. 4 shows planar arrangement of the difference-in-grade constructions. FIG. 4 (a) shows a feature in which the difference-in-grade constructions 40 are concentrically arranged on the disk-shaped diaphragm construction 150, and FIG. 4 (b) shows a feature in which the difference-in-grade constructions 40 are arranged in the radial directions on the disk-shaped diaphragm construction 150. The construction of FIG. 4 (a) is effective for a case where the remaining stress in the diaphragm construction 150 has a bending moment having a distribution in the thickness direction, and the construction of FIG. 4 (b) is effective for a case where the diaphragm construction 150 has the remaining stress in the planar direction.

By the construction described above, since the diaphragm construction has the difference-in-grade constructions of the deformation reducing means due to remaining stress, the measurement error can be reduced and it is possible to provide the pressure sensor good in characteristic for vehicle use.

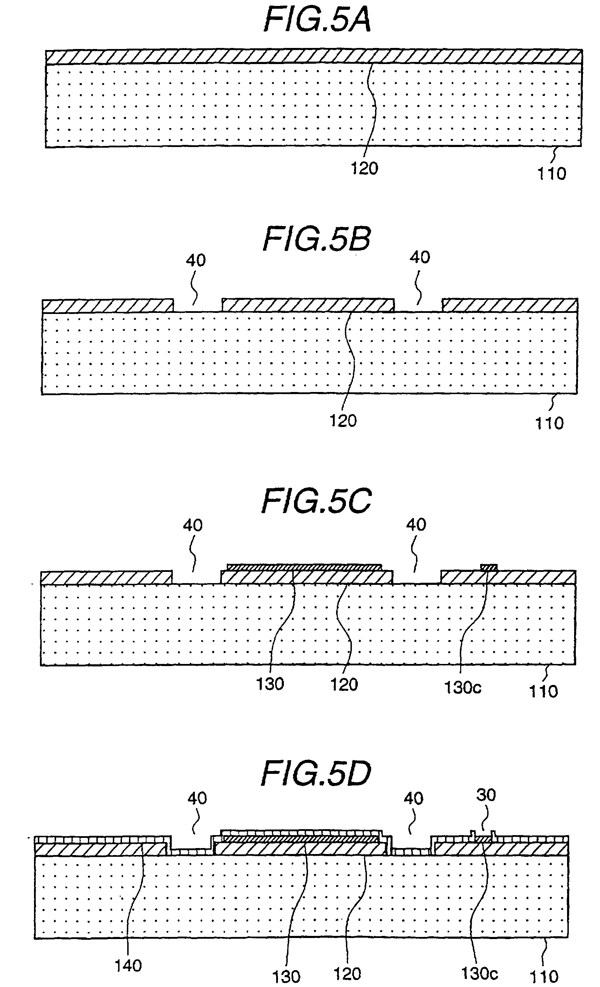

FIG. 5 shows a manufacturing process of the pressure sensor in accordance with the present invention.

The dielectric body 120 is formed on the semiconductor substrate 120 to be used for IC manufacturing through thermal oxidation of the semiconductor substrate 110 (FIG. 5 (a)). Next, after masking by photo-lithography the difference-in-grade constructions 40 are formed on the dielectric body 120 by etching desired portions (FIG. 5 (b). The first embodiment can be fabricated through the common processes except for eliminating the process of FIG. 5 (b). FIG. 5 (c) shows a feature in which the fixed electrode 130 and the diaphragm wiring 130c are formed with an electric conductive polycrystalline silicon or the like through a photo-etching process at a time.

As an alternative of the processes of FIG. 5 (a) to (c), there is a method in which the processes are simplified by commonly processing the field oxide film of a MOS device and the dielectric body 120, and by commonly processing the gate wiring and the fixed electrode 130. In this case, the processes of FIG. 5 (a) to (c) can be replaced the well known processes to be described below. Initially, a nitride film is formed on the semiconductor substrate 110, and portions to form the field oxide film on the nitride film are removed. Next, thermal oxidation is performed to selectively form the field oxide film, and then the nitride film is removed. Although the gate wiring is formed with the doped polycrystalline silicon film, the silicide film or the like, the fixed electrode 130 and the diaphragm wiring 130c are also formed on the field oxide film at a time.

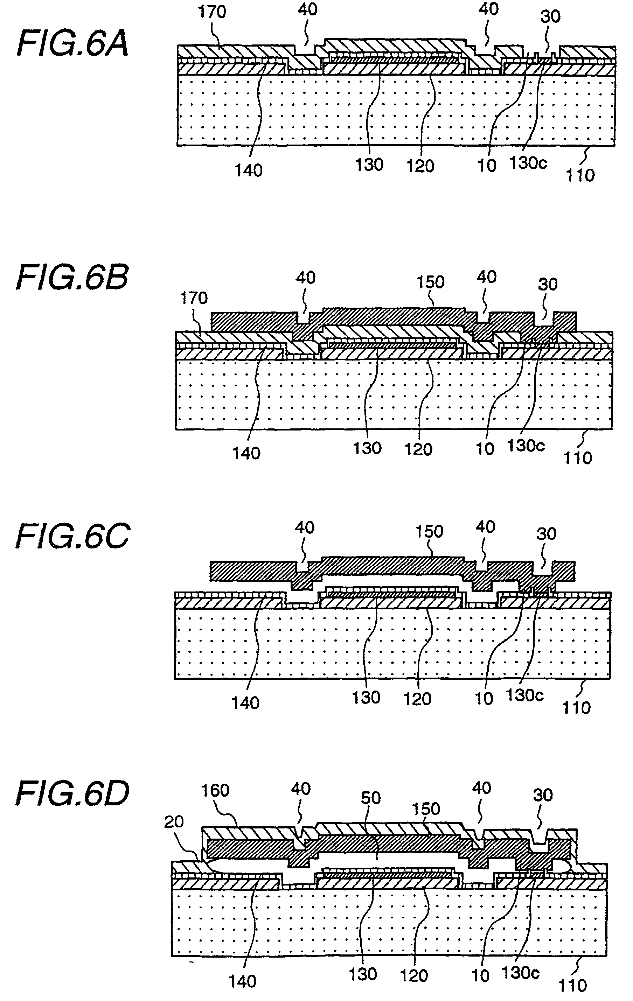

FIG. 5 (d) shows a feature in which after depositing the barrier layer 140 of the LPCVD nitride film, the connection part 30 of the diaphragm wiring 130c and the diaphragm construction 150 is formed through photo-etching process. FIG. 6 (a) shows a feature in which after depositing the isolation layer 170, the stages 10 for the diaphragm construction 150 to the semiconductor substrate 110 is formed. The thickness of the isolation layer 170 is set to 0.1 to 1.3 µm. A silicon oxide film is used for the isolation layer 170 in most cases, and the present embodiment employs PSG of an HF group etching solution which is high in etching speed.

FIG. 6 (b) shows a feature in which after depositing on the isolation layer having the stages 10 formed, the diaphragm construction 150 is formed on the isolation layer as a base through photo-etching. As the method to make the diaphragm construction 150 electrically conductive, there is a method to dope the diaphragm construction 150 with an impurity. As the impurity doping method, there is a method of performing phosphorus treatment of solid diffusion or ion injection after depositing the polycrystalline silicon as the diaphragm construction 150. In addition to these, there is a method of depositing a doped polycrystalline silicon by mixing an impurity during depositing the polycrystalline silicon. In a case where a PSG highly containing a p-type or n-type impurity in the isolation layer 170, there is a method that the polycrystalline silicon is made electrically conductive by performing annealing after depositing the polycrystalline silicon to solid-diffuse the impurity in the PSG into the polycrystalline silicon.

FIG. 6 (c) shows a feature in which the isolation layer 170 formed is removed through etching. In a case where the barrier layer 140 of the LPCVD nitride film and the isolation layer 170 of PSG are combined, wet etching can be performed using an HF group etching solution. In the present embodiment, etching can be performed for the diaphragm construction 150 having a diameter up to 400 µm at maximum by selection ratio of the side etching amount of the isolation layer 170 and the barrier layer 140.

FIG. 6 (d) shows a feature in which the diaphragm construction 150 is air-tightly sealed with the LPCVD silicon oxide film 160.

The condition of fabricating the LPCVD silicon oxide film 160 in this embodiment is that a deposition temperature is 720 to 780 °C, a deposition pressure is 30 to 120 Pa, and a deposition gas used is ethyl silicate (TEOS: tetraethyl-orthosilicate) + oxygen (O₂). Therefore, the cavity 50 can be air-tightly sealed in a nearly vacuum state of 30 Pa to 120 Pa which is the pressure at depositing the LPCVD silicon oxide film 160.

By the present processes, it is possible to manufacture a capacitive semiconductor pressure sensor integrated on a single substrate together with a CMOS circuit, and to provide a pressure sensor which is small in size and low in cost and is hardly affected by remaining stress of the diaphragm construction 150.

Although description has been made on the embodiments in which the present invention is applied to the electrostatic capacitive pressure sensor. The present invention can be applied to a piezo-resistive pressure sensor which is different in detection principle.

By the construction described above, the cavity 50 of 0.1 to 1.3 µm can be air-tightly sealed to a nearly vacuum state of 30 Pa to 120 Pa through a small number of processes, and it is possible to provide the stable and highly reliable pressure sensor which is small in floating capacitance and leakage current and good in characteristic for vehicle because the diaphragm is completely covered with the deposited oxide silicon film through the LPCVD method. Further, since the diaphragm construction 150 has the difference-in-grade construction 40 of means for reducing deformation due to the remaining stress, the error of the pressure sensor can be reduced because it is possible to prevent the initial position from deviating from a designed value and to control the direction of the deformation.

Furthermore, since it is possible to manufacture the capacitive semiconductor pressure sensor integrated on a single substrate together with a CMOS circuit, the one-chip pressure sensor with the circuit portion can be manufactured to reduce its size and cost.

According to the present invention, the diaphragm can be sealed with a small number of processes and with low cost.

## Claims

1. A capacitive type pressure sensor, said capacitive semiconductor pressure sensor comprising:
a semiconductor substrate (110); and
a diaphragm (150) having a stage part (10) for being fixed onto a surface of said semiconductor substrate (110), the diaphragm (150) being displaced corresponding to a change of pressure, wherein
a cavity (50) is formed between the surface of said semiconductor substrate (110) and said diaphragm (150),
wherein said cavity (50) has a nearly uniform gap of 0,1µm to 1.3 µm and is air-tightly sealed by a silicon oxide film (160) deposited through an LPCVD method.
**characterized in that**
a fixed electrode (130) in the form of an electrically conductive film is provided at the semiconductor substrate (110), and
a dielectric film (120) is formed between said semiconductor substrate (110) and said fixed electrode (130), and said diaphragm (150) is installed on said semiconductor substrate (110) through said dielectric film (120) without the fixed electrode (130) being interposed.

2. The sensor of claim 1, wherein the diaphragm has a plurality of separated stages (10) arranged in the outer periphery of the diaphragm and defining spacings inbetween them and fixed to the surface of the semiconductor substrate.

3. The sensor according to claim 1 or 2, wherein an integrated circuit is formed on the substrate (110).

## Patentansprüche

1. Drucksensor vom Kapazitätstyp, mit:
einem Halbleitersubstrat (110); und
einer Membran (150) mit einem Stativteil (10) zur Befestigung auf der Oberfläche des Halbleitersubstrats (110), wobei die Membran (150) entsprechend einer Druckänderung verschoben wird, wobei
zwischen der Oberfläche des Halbleitersubstrats (110) und
der Membran (150) ein Hohlraum (50) gebildet ist,
wobei der Hohlraum (50) einen näherungsweise gleichförmigen Spalt von 0,1µm bis 1,3µm hat und durch eine Siliziumoxidschicht (160), die durch ein LPCVD-Verfahren aufgebracht wurde, luftdicht verschlossen ist,
**dadurch gekennzeichnet, dass**
eine feste Elektrode (130) in Form einer elektrisch leitenden Schicht auf dem Halbleitersubstrat (110) vorgesehen ist, und zwischen dem Halbleitersubstrat (110) und der festen Elektrode (130) eine dielektrische Schicht (120) gebildet ist,
wobei die Membran (150) auf dem Halbleitersubstrat (110) mittels der dielektrischen Schicht (120) angebracht ist, ohne dass die feste Elektrode (130) dazwischen liegt.

2. Sensor nach Anspruch 1, bei dem die Membran mehrere getrennte Stative (10) hat, die am äußeren Rand der Membran angeordnet sind und die zwischen sich Freiräume definieren und auf der Oberfläche des Halbleitersubstrats befestigt sind.

3. Sensor nach Anspruch 1 oder 2, wobei auf dem Substrat eine integrierte Schaltung (110) ausgebildet ist.

## Revendications

1. Un capteur de pression capacitif, ledit capteur de pression semi-conducteur capacitif comprenant :
un substrat semi-conducteur (110) ; et
un diaphragme (150) possédant une marche (10) destinée à être fixée sur une surface dudit substrat semi-conducteur (110), le diaphragme (150) étant déplacé en fonction d'un changement de pression, dans lequel
une cavité (50) est formée entre la surface dudit substrat semi-conducteur (110) et ledit diaphragme (150),
dans lequel ladite cavité (50) possède un espace presque uniforme compris entre 0,1 µm et 1,3 µm et est rendue étanche à l'air par un film d'oxyde de silicium (160) déposé au moyen d'un procédé LPCVD (procédé de dépôt chimique en phase vapeur à basse pression).
**caractérisé en ce que**
une électrode fixe (130) sous la forme d'un film électriquement conducteur est disposée sur le substrat semi-conducteur (110), et
un film diélectrique (120) est formé entre ledit substrat semi-conducteur (110) et ladite électrode fixe (130), et ledit diaphragme (150) est installé sur ledit substrat semi-conducteur (110) par le biais dudit film diélectrique (120) sans que l'électrode fixe (130) soit interposée.

2. Le capteur de la revendication 1, dans lequel le diaphragme possède une pluralité de marches séparées (10) qui sont disposées à la périphérie externe du diaphragme, définissant des espacements entre eux et fixées à la surface du substrat semi-conducteur.

3. Le capteur selon les revendications 1 ou 2, dans lequel un circuit intégré est formé sur le substrat (110).
